# EUROPÄISCHE PATENTSCHRIFT

(11) **EP 0 534 456 B1**
(45) Veröffentlichungstag und Bekanntmachung des Hinweises auf die Patenterteilung: **02.05.1997**
(21) Anmeldenummer: 92116438.0
(22) Anmeldetag: 25.09.1992
(51) Int. Cl.: A61C 8/00

(54) **Stützstruktur für eine Zahnprothese**
Supporting structure for a dental prosthesis
Structure de support pour prothèse dentaire

(30) Priorität: 27.09.1991 CH 2875/91; 03.04.1992 CH 1089/92
(43) Veröffentlichungstag der Anmeldung: 31.03.1993
(73) Patentinhaber: HADER SA, 2301 La Chaux-de-Fonds (CH)
(72) Erfinder: Hader, Helmut, CH-2012 Auvernier (CH)
(74) Vertreter: Patentanwälte Ostriga & Sonnet

(56) Entgegenhaltungen:
- EP-A- 0 393 324
- WO-A-91/00711
- DE-U- 9 200 264
- FR-A- 2 085 013

## Beschreibung

In der Praxis der Zahntechnik, hauptsächlich bei dem Einsetzen von Zahnprothesen, herausnehmbar oder nicht, ist das Problem des Befestigungsträgers häufig schwierig zu lösen. Eine große Prothese, wie ein künstliches Gebiß für einen halben Kiefer oder einen Kiefer, kann nicht nur auf einer oder zwei Stützen befestigt werden. Um solche großen Prothesen zu befestigen, muß man über eine Struktur verfügen, die selbst auf mehreren oder mindestens zwei Stützpunkten ruht, auf die sich die Prothese durch Klipsung befestigen kann. Eine solche Struktur stützt sich generell auf zwei oder mehrere Implantate, die fest in einer Wurzel oder in dem Kieferknochen des Patienten befestigt sind. Da es nicht möglich ist, die Trägerimplantate präzise zu befestigen, erfolgt die Anbringung derselben manuell. Da weder ein Meßorgan noch ein mechanisches Positionierorgan zur Verfügung steht, müssen die Elemente dieser Struktur einen Ausgleich von Ungenauigkeiten erlauben. Hierzu muß man entweder diese Struktur vor Ort schaffen, indem man Verbindungselemente formt und fixiert im Zusammenhang mit den von den Implantaten gebildeten Stützen oder indem man über vorfabrizierte Elemente verfügt, die eine ausreichende Flexibilität erlauben.

Für die vorstehend aufgezeigte Problematik wurden verschiedene Lösungen vorgeschlagen, die jedoch nicht voll zufriedenstellten.

Das Dokument EP-A1-393.324 beschreibt eine Befestigungsvorrichtung für eine dentale Suprastruktur mit Implantatschrauben mit Kappe, auf der eine Stütze befestigt ist. Diese Stütze enthält mehrere Lager, die für die Aufnahme von Gelenken bestimmt sind, welche die Enden der Verbindungsarme bilden. Die Gelenke werden in den Lagern mit einer Schraube gehalten, die in den Kopf der Implantatschraube geschraubt ist.

Das vorbeschriebene bekannte System ist wegen der sehr geringen Abmessungen seiner Elemente bruchempfindlich. Da außerdem die beiden Lager der Stützen diametral entgegengesetzt gerichtet sind, ist es unmöglich, stark gebogene Stützstrukturen zu realisieren.

Das Dokument US 4.062.119 beschreibt eine dentale Suprastruktur, deren Implantate zwangsläufig große Abmessungen aufweisen, da jedes Implantat zwei Befestigungsorgane aufnehmen muß. Solche Implantate erfordern aufwendige operative Eingriffe, da sie nicht durch einfaches Verschrauben in dem Kieferknochen befestigt werden können und daher für den Patienten sehr traumatisch sind.

Eine andere dentale Trägerstruktur, die im Dokument US 3.748.739 beschrieben ist, enthält zwangsläufig eine sehr reduzierte Anzahl von Implantaten, drei oder vier für einen kompletten Kiefer, wegen der Komplexität der Verbindungselemente zwischen diesen Implantaten. Tatsächlich sind diese Verbindungselemente aus mehreren Elementen geformt, die eins über das andere montiert und in der Länge mechanisch regulierbar sind. Diese Längenregulierung muß blockiert werden können auf Grund der geringen Anzahl der Stützpunkte oder Implantate, um eine starre und ausreichend solide Struktur für die Abstützung einer Prothese zu erhalten.

Das Ziel der vorliegenden Erfindung ist es, dem Arzt eine modulierbare Struktur zur Verfügung zu stellen, die aus vorfabrizierten Elementen geformt ist, die die Verbindung der Implantate untereinander zur Bildung eines Trägers erlaubt, auf dem eine herausnehmbare oder nicht herausnehmbare Prothese befestigt werden kann.

Dieses alles, um den Unzulänglichkeiten der oben erwähnten Strukturen zu begegnen. Das Problem, das die vorliegende Erfindung zu lösen erlaubt, ist folglich die Realisierung einer Prothesen- Stützstruktur, die einfache, robuste Verbindungselemente und eine große Anzahl an Stützpunkten sowohl im Kiefer als auch mit der Prothese aufnimmt. Und dies alles mit einer großen Flexibilität hinsichtlich der Form, Krümmung und Höhendifferenz , welcher die Struktur folgen muß.

Die vorliegende Erfindung hat eine Stützstruktur für eine Zahnprothese entwickelt, die durch die im Anspruch 1 aufgeführten Merkmale gekennzeichnet ist.

Die beiliegende Zeichnungen stellen schematisch bevorzugte Ausführungsbeispiele der Stützstruktur einer Zahnprothese nach der Erfindung dar. Hierzu zeigt:
Fig. 1 eine Draufsicht auf eine Bogenstruktur, die neun Implantate verbindet;
Fig. 2 eine Seitenansicht, welche die Befestigung der Elemente der Struktur an ein Implantat darstellt;
Fig. 3 ist eine Schnittansicht der in Fig. 2 dargestellten Elemente;

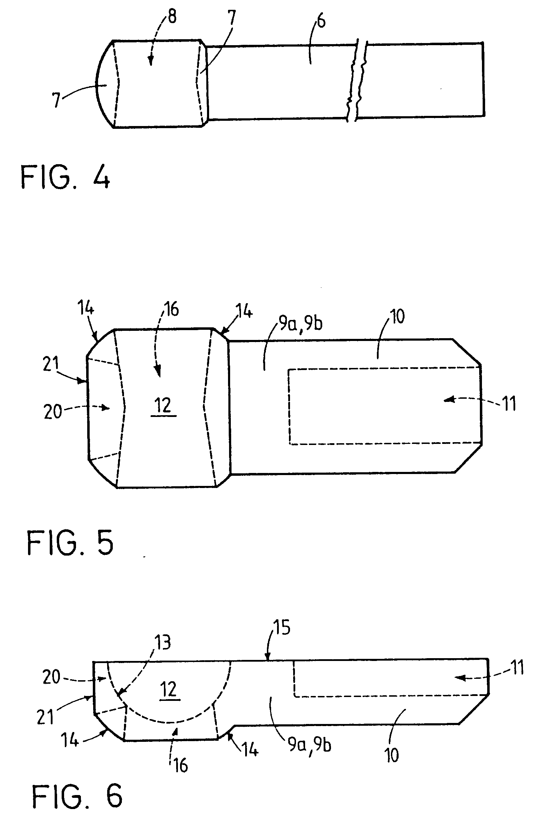

Fig. 4 bis 6 die Bauelemente der Struktur;
Fig. 7 und 8 eine zweite Ausführungsform des weiblichen Verbindungselements der Struktur vor der Montage als Draufsicht und Aufriß;
Fig. 9 das montierte weibliche Verbindungselement der Fig. 7 und 8;
Fig. 10 ein männliches und ein weibliches Element nach Fig. 9 montiert;
Fig. 11 eine Variante des weiblichen Verbindungselements nach Fig. 9 und
Fig. 12 ein weibliches Element der Fig. 11, montiert an ein männliches Verbindungselement.

Die Stützstruktur einer Zahnprothese nach der Erfindung setzt sich aus einer relativ begrenzten Anzahl (fünf bei dieser Ausführung) von vorfabrizierten Bauelementen zusammen. Diese erlauben es, Implantate untereinander zu verbinden, ohne daß es erforderlich wäre, diese im Hinblick auf Abstand und Winkelstellung zueinander präzise zu positionieren. Diese Elemente erlauben es außerdem, sehr eng beieinanderliegende Implantate zu verbinden, und zwar unter Berücksichtigung der Neigungs-, Orientierungs- und Höhendifferenzen. Ferner benötigen diese Elemente keinerlei mechanische Regulierung oder Verschraubung für ihre Längeneinstellung.

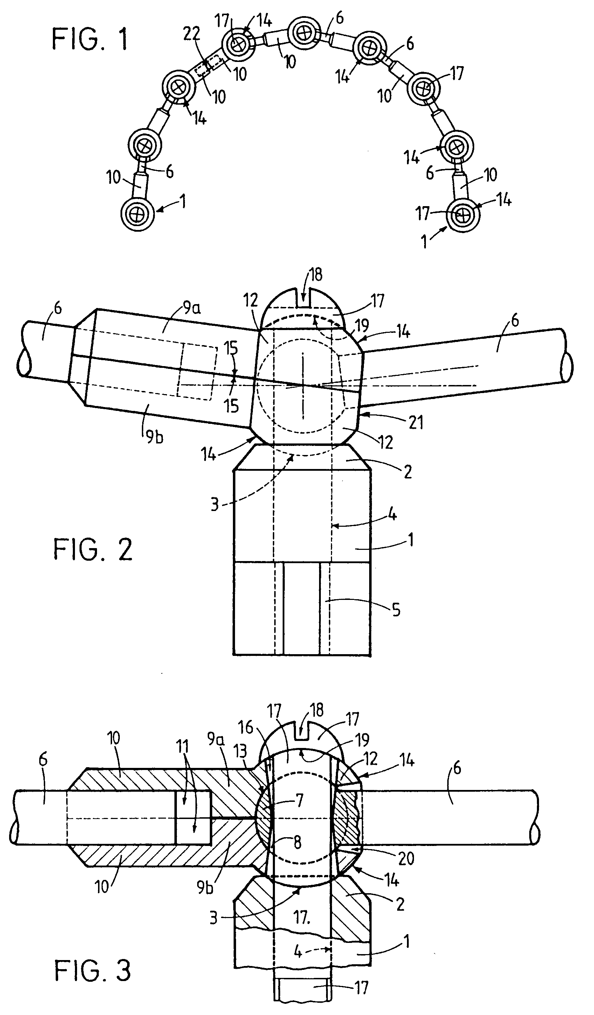

Diese Bauelemente sind besonders gut sichtbar in den Fig. 2 und 3. Sie bestehen aus:
a.) Einem Pfeiler 1, dessen unteres Teil so gestaltet ist, daß er auf einem Implantat, im allgemeinen verschraubt, befestigt werden kann, welches selbst in bekannter Art u. Weise in einer Zahnwurzel oder im Kieferknochen des Patienten befestigt ist. Das obere Teil dieses Pfeilers 1 stellt ein kegelstumpfförmiges Ende 2 dar, dessen obere Oberfläche eine kugelförmige Aushöhlung 3 aufweist. Dieser Pfeiler 1 enthält noch eine axiale Bohrung 4, die im unteren Bereich des Pfeilers 1 mit einem Gewinde 5 endet.
b.) Einem männlichen Verbindungsorgan, das einen Schaft 6 besitzt, dessen eines Ende ein Kugelgelenk 7 (bzw. Kugel 7) aufweist. Das Kugelgelenk 7 ist von einem Durchgang 8 durchsetzt, dessen Achse sich senkrecht zu der Achse des Schaftes 6 erstreckt und dessen Form, in Schnittansicht, die eines Diabolos hat. Dieser Durchgang 8 weist folglich eine in der Mitte befindliche Verengung auf, deren Durchmesser dem der Bohrung 4 des Pfeilers 1 entspricht und sich allmählich beiderseits vergrößert.
c.) Einem weiblichen Verbindungsorgan, das zwei nebeneinanderlegbare Schalen oder Hälften 9a, 9b aufweist. Jede dieser Schalen 9a, 9b besitzt einen halbzylinderförmigen Ansatz 10 mit einer ebenfalls halbzylinderförmigen Aushöhlung 11, deren eines Ende von einem Kopf 12 begrenzt ist. Dieser Kopf 12 enthält eine halbkugelförmige Aussparung 13, deren Durchmesser dem Durchmesser des Gelenks 7 des männlichen Verbindungsstücks entspricht und einen äußeren sphärischen Kranz 14, deren Kurvenradius dem der Aushöhlung 3 des Pfeilers 1 entspricht. Der Kopf 12 ist noch von einem Durchgang 16 durchquert. Mit einer zur ebenen Verbindungsfläche 15 der beiden nebeneinanderliegenden Schalen 9a, 9b senkrechten Achse, weist der Durchgang 16 eine zentrale Verengung auf von einem Durchmesser, der dem Durchmesser der Bohrung 4 des Pfeilers entspricht, und weitet sich allmählich beiderseits dieser Verengung aus.
   Jede Schale 9a, 9b enthält noch eine Öffnung 20, koaxial zur Aushöhlung 11 und im Anschluß an die kugelförmige Aushöhlung 13 zur Vorderseite des Kopfes 12 hin verlaufend. Die Öffnung 20 weitet sich allmählich von der Aushöhlung 13 bis zur Vorderseite 21 des Kopfes 12 und ihr geringster Durchmesser entspricht dem Außendurchmesser des Schaftes 6 des männlichen Verbindungsorgans.
d.) Einer Schraube 17, deren Körper einen geringeren Durchmesser hat, aber fast gleich ist mit der Bohrung 4 des Pfeilers 1 und folglich mit den Verengungen der Durchgänge 8 und 16 der männlichen und weiblichen Verbindungsorgane. Eines der Enden dieser Schraube 17 enthält einen Schraubengang, der dazu bestimmt ist, mit dem Gewinde 5 des Pfeilers 1 zusammenzupassen, während das andere Ende durch einen Kopf geformt ist. Die obere Oberfläche dieser Schraube 17 hat einen oder zwei Schlitze 18, während die untere Seite des Kopfes eine konkave, kugelförmige Oberfläche 19 mit einem Kurvenradius aufweist, der dem der kugelförmigen Kronen bzw. sphärischen Kränze 14 des weiblichen Verbindungsorgans entspricht.
e.) Einer Struktur, die schließlich noch Stäbe 22 enthalten kann, mit einem Durchmesser, der dem der Schäfte 6 der männlichen Verbindungsorgane entspricht.

Mit Hilfe dieser Standardelemente, die somit vorfabriziert werden können, kann eine Struktur, wie sie in Fig. 1 dargestellt ist, realisiert werden. Man befestigt zuerst auf jedem der neun Implantate einen Pfeiler 1. Man plaziert dann auf einem der Strukturendpfeiler eine Schale 9b, wobei der sphärische Kranz 14 in der Aushöhlung 3 des Pfeilers 1 einliegt. Das Kugelgelenk 7 eines männlichen Verbindungsorgans wird dann in die kugelförmige Aushöhlung 13 der Schale 9b eingesetzt, wobei der Schaft 6 des männlichen Organs die Öffnung 20 des Kopfes 12 der Schale 9b durchsetzt. Sodann folgt die zweite Schale 9a, die somit das Gelenk 7 des männlichen Organs und den Schaft 6 eines anderen Verbindungsorgans umschließt.

Schließlich führt man die Schraube 17 in die Durchgänge 16, 8 und 4 der Schalen 9a, 9b des Gelenks (Gelenkkugel) 7 und des Pfeilers 1 ein, dann verschraubt man diese mit dem Gewinde 5 des Pfeilers 1, drückt somit den Kopf der Schraube 17 gegen die kugelförmige Krone 14 der Schale 9a, zieht alles auf dem Pfeiler 1 fest und verbindet diesen mit dem Implantat.

Dank der Konizität der Durchgänge 8, 16, können die Längsachsen eines männlichen Verbindungsorgans und eines weiblichen Verbindungsorgans, das auf einer gleichen Drehachse befestigt ist, in jeder Richtung einen Winkel untereinander und mit dem Pfeiler bilden. Man kann somit nicht fluchtende und auf verschiedenen Höhenebenen befindliche Pfeiler untereinander verbinden. Ferner, da der Schaft 6 der männlichen Verbindungsorgane axial in die Aushöhlungen 11 der Schalen 9a, 9b gleitet, kann die Entfernung zwischen zwei Pfeilern ebenfalls variieren oder ungleich sein. Diese Standardelemente erlauben somit, eine Struktur aus vorfabrizierten Elementen herzustellen, mit Hilfe von Implantaten, deren Positionierung also nicht sehr präzise sein muß.

Die Zahnprothese befestigt sich dann durch Klipsung auf die zylindrischen Teile 10 der weiblichen Verbindungsorgane.

Die Stäbe 22 werden benutzt, um zwei weibliche Verbindungsorgane miteinander zu verbinden.

Die beschriebene Struktur enthält nur einfache Elemente, die keinerlei Einstellung benötigen. Die Längeneinstellung der Verbindungen, die zwei Implantate verbinden, geschieht automatisch. Die Anzahl der Stützpunkte oder Implantate kann erhöht werden und gibt dieser Strukturart eine anpaßbare Stabilität. Die Flexibilität der Struktur ist sehr groß, denn sie gestattet sehr große Winkel oder Abweichungen zwischen den Verbindungselementen. Die Struktur ist robust; die Elemente, die sie bilden, weisen die in dem zur Verfügung stehenden Raum größtmöglich möglichen Abmessungen auf. Man realisiert somit eine optimale Struktur hinsichtlich ihrer Festigkeit, Anpassungsfähigkeit und Stabilität oder Starrheit.

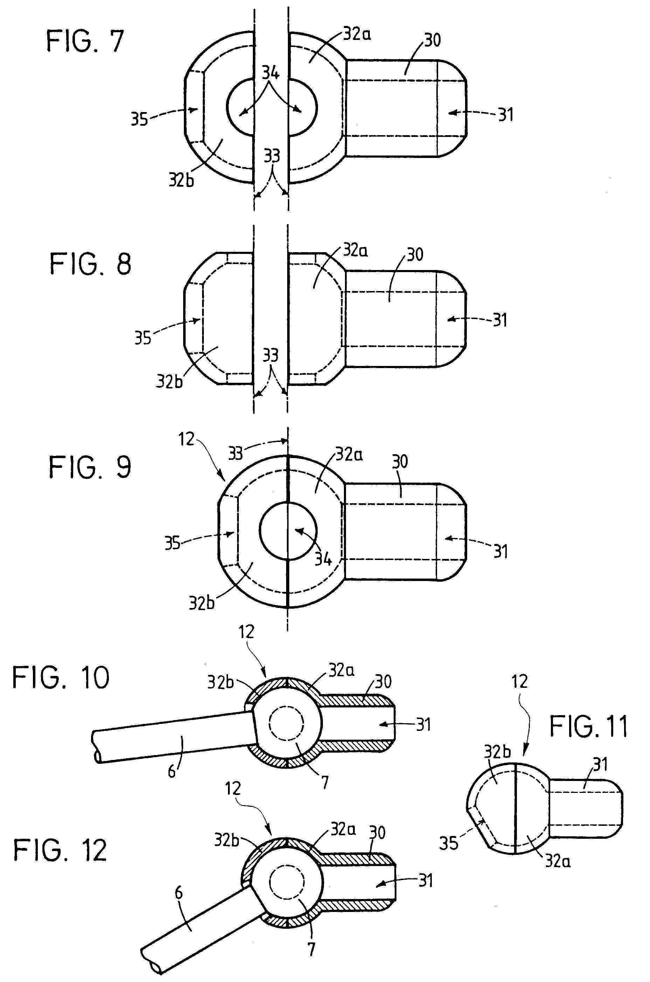

Die Fig. 7 bis 12 der Zeichnung stellen die Stützstruktur einer Zahnprothese dar, die immer einen Pfeiler, ein männliches Verbindungsorgan, eine Schraube und Stäbe, wie oben beschrieben, enthält, weist aber ein weibliches Verbindungsorgan entsprechend einer zweiten Ausführungsform auf.

Diese zweite Ausführungsform des weiblichen Verbindungsorgans enthält einen zylindrischen Ansatz 30, versehen mit einer zentralen koaxialen Bohrung 31. Am Ansatz 30 ist fest ein kugelförmig ausgehöhltes Teil, das, zudem einen Kopf 12 bildend, aus zwei Teilen 32a, 32b hergestellt ist, die für eine Schweißverbindung mit Laser z.B. gemäß der Linie 33 bestimmt sind.

Das kugelförmige Teil 32a, 32b besitzt eine durchgehende Bohrung 34, die dazu bestimmt ist, dem Pfeiler einen Durchgang zu geben und eine runde Öffnung 35, die mit der zentralen Bohrung 31 des Ansatzes 30 gleichachsig ist.

Der Zusammenbau der Struktur erfolgt, indem man den Schaft 6 eines männlichen Verbindungsorgans in die Öffnung 35 des kugelförmigen Teils 32b einführt und dann die beiden kugelförmigen Teile 32a, 32b entlang der Linie 33 mit Laser zusammenschweißt. Das freie Ende des Schaftes 6 wird dann in die Bohrung 31 eines anliegenden weiblichen Verbindungsorgans eingeführt, um eine durchgehende Struktur zu bilden. Diese Struktur ist mit Implantaten durch den Pfeiler, der jedes Gelenk durchquert verbunden.

Zusätzlich zu den bereits beschriebenen Vorteilen der Struktur, bietet diese letzte Ausführungsform den Vorteil einer einfachen Montage für den Zahnarzt, da die Elemente der Struktur, weibliches Organ - männliches Organ, bereits zwei zu zwei vormontiert sind.

In einer nicht dargestellten Variante kann man die Gelenke (Gelenkkugeln) 7 mit Riefen bzw. einer Rillierung versehen und die Vertiefungen dieses Gelenks gleichfalls. Die Riefen bilden vorzugsweise einen Winkel mit denen des Gelenks. Bei der Montage gibt der Arzt eine bestimmte Menge Klebstoff in die zentrale Bohrung 31 des Ansatzes 30 des weiblichen Organs. Dieser Klebstoff wird bei der Einführung des freien Schaftes des benachbarten Verbindungsorgans in die zentrale Bohrung 31 in den Raum zwischen dem Gelenk 7 und seiner Vertiefung gedrängt. Nach dem Trockenwerden erhält man somit eine sehr starre verblockte Anordnung und somit eine sehr stabile Struktur.

In einer Variante, die in den Fig. 11 und 12 dargestellt ist, weist der kugelförmige Teil 32b des weiblichen Verbindungsorgans 30, 32 eine zu der Achse der zentralen Bohrung 31 des Ansatzes 30 im Winkel versetzte Öffnung 35 auf. Dieses erlaubt einen stärker ausgeprägten Winkel zwischen den Achsen der männlichen und weiblichen Verbindungsorgane.

## Patentansprüche

1. Zahnprothesen-Stützstruktur, umfassend eine Reihe von vorfabrizierten Standardelementen (1, 6, 7; 9a, 9b; 17; 32a, 32b), mit Pfeilern (1), die für eine konventionelle Befestigung auf den Implantaten bestimmt sind; weibliche Verbindungsorgane (9a, 9b; 32a, 32b), jedes einen Kopf (12) und einen Ansatz (10, 30) aufweisend, deren Kopf (12) einen kugelförmigen Hohlraum (13) aufweist und der von Durchgängen (16, 20) durchquert ist, die auf drei seiner Seitenflächen münden, und deren Ansatz (10, 30) eine axiale zylindrische Bohrung (11, 31) aufweist, die auf die Endfläche mündet; männliche Verbindungsorgane (6, 7), die aus einem zylindrischen Schaft (6) geformt sind, der an einem seiner Enden mit einem Gelenk (7) abschließt, das von einem Durchgang (8) mit zum Schaft (6) senkrechter Achse durchquert ist; Durchgänge (16, 20) der Köpfe (12) der weiblichen Verbindungsorgane (9a, 9b), wobei diese Durchgänge (16, 20) sich allmählich zum Äußeren dieser Köpfe (12) ausweiten und eine kleinste Abmessung aufweisen, die dem Durchmesser der Schraube (17) entspricht; einen Durchgang (8), der das Gelenk (7) der männlichen Organe (6, 7) durchquert, und der in seinem mittleren Bereich eine Durchmesserverengung entsprechend dem Durchmesser des Schraubenkörpers (17) aufweist; und Schrauben (17), die es ermöglichen, ein weibliches (9a, 9b; 32a, 32b) und/oder männliches Verbindungsorgan (6, 7) mit einem Pfeiler (1) zu verbinden.

2. Struktur nach Anspruch 1, dadurch gekennzeichnet, daß die weiblichen Verbindungsorgane aus zwei Halbschalen (9a, 9b) gebildet werden, jede mit einem Kopf (12) und einem Ansatz (10), wobei die Köpfe (12) kugelförmige Aushöhlungen (13) aufweisen und von Durchgängen (16, 20) durchquert sind, die auf zwei von Seitenflächen der Köpfe (12) münden, wobei die Ansätze (10) axiale zylindrische Aushöhlungen (11) haben, die auf der Endfläche (bei 12) münden.

3. Struktur nach Anspruch 1 oder nach Anspruch 2, dadurch gekennzeichnet, daß der Durchmesser der zylindrischen Bohrung (31) oder der zylindrischen Aushöhlungen (11) des Ansatzes (30; 10) des weiblichen Verbindungsorgans (32a, 36b; 9a, 9b) dem Durchmesser der Schäfte (6) der männlichen Organe (6, 7) entspricht.

4. Struktur nach einem der vorgenannten Ansprüche, dadurch gekennzeichnet, daß die obere Fläche der Pfeiler (1) eine Stützfläche in Form eines Kugelanteils (3) hat, mit einem Krümmungsradius, der dem des externen Kugeloberflächenanteils der Köpfe (12) des weiblichen Verbindungsorgans (9a, 9b; 32a, 32b) entspricht.

5. Struktur nach einem der vorstehenden Ansprüche, dadurch gekennzeichnet, daß die untere Seite der Schraubenköpfe (bei 17) eine kugelförmige Oberfläche (19) bildet mit einem Krümmungsradius, der dem der Pfeileraushöhlung (3) und dem Anteil der externen kugelförmigen Oberfläche der Köpfe (12) der weiblichen Verbindungsorgane (9a, 9b; 32a, 32b) entspricht.

6. Struktur nach einem der vorstehenden Ansprüche, dadurch gekennzeichnet, daß das Gelenk eine Kugel (7)) aufweist.

7. Struktur nach einem der vorstehenden Ansprüche, dadurch gekennzeichnet, daß sie noch Stäbe (22) mit einem Durchmesser, der dem Durchmesser der Schäfte (6) der männlichen Organe (6, 7) entspricht, enthält.

8. Struktur nach einem der Ansprüche 1 und 3 bis 7, dadurch gekennzeichnet, daß der Kopf (12) der weiblichen Verbindungsorgane von zwei, durch Schweißung (bei 33) montierten Hohlkugelteilen (32a, 32b) gebildet wird.

9. Struktur nach einem der vorstehenden Ansprüche, dadurch gekennzeichnet, daß die Öffnung (20, 35) des Kopfes (12) des weiblichen Verbindungsorgans (9a, 9b; 32a, 32b), die entgegengesetzt dem Ansatz (10, 30) liegt, mit der Bohrung (11; 31) des Ansatzes (10, 30) achsgleich ist.

10. Struktur nach einem der Ansprüche 1 bis 8, dadurch gekennzeichnet, daß die Öffnung (20, 35) des Kopfes (12) des weiblichen Verbindungsteils (9a, 9b; 32a; 32b), die entgegengesetzt dem Ansatz (10, 30) liegt, winkelig versetzt zu der Achse der Bohrung (11, 31) des Ansatzes verläuft.

## Claims

1. Dental prosthesis support structure comprising a number of prefabricated standard elements (1, 6, 7; 9a, 9b; 17; 32a, 32b), with pillars (1) which are intended for a conventional attachment to the implants; female connecting parts (9a, 9b; 32a, 32b), each having a head (12) and a projection (10, 30), whereby the head (12) has a spherical cavity (13) and is traversed by ducts (16, 20) which open out onto three of its lateral faces, and whereby the projection (10, 30) has an axial cylindrical bore (11, 31) which opens out onto the end face; male connecting parts (6, 7) which are formed from a cylindrical shaft (6) which at one of its ends terminates with an articulation (7) which is traversed by a duct (8) having an axis perpendicular to the shaft (6); ducts (16, 20) pertaining to the heads (12) of the female connecting parts (9a, 9b), whereby these ducts (16, 20) gradually widen towards the exterior of these heads (12) and have a smallest measurement corresponding to the diameter of the screw (17); a duct (8) which traverses the articulation (7) of the male parts (6, 7) and which in its central region has a narrowed diameter corresponding to the diameter of the screw body (17); and screws (17) which make it possible to connect a female (9a, 9b; 32a, 32b) and/or male connecting part (6, 7) to a pillar (1).

2. Structure according to Claim 1, characterised in that the female connecting parts are formed from two half-shells (9a, 9b), each having a head (12) and a projection (10), whereby the heads (12) have spherical cavities (13) and are traversed by ducts (16, 20) which open out onto two of lateral faces of the heads (12) and whereby the projections (10) have axial cylindrical cavities (11) which open out on the end face (at 12).

3. Structure according to Claim 1 or Claim 2, characterised in that the diameter of the cylindrical bore (31) or of the cylindrical cavities (11) of the projection (30; 10) of the female connecting part (32a, 32b; 9a, 9b) corresponds to the diameter of the shafts (6) of the male parts (6, 7).

4. Structure according to one of the preceding claims, characterised in that the upper face of the pillars (1) has a support face in the form of a spherical portion (3) with a radius of curvature corresponding to that of the external spherical surface portion of the heads (12) of the female connecting part (9a, 9b; 32a, 32b).

5. Structure according to one of the preceding claims, characterised in that the lower side of the screw heads (at 17) forms a spherical surface (19) with a radius of curvature corresponding to that of the pillar cavity (3) and the portion of the external spherical surface of the heads (12) of the female connecting parts (9a, 9b; 32a, 32b).

6. Structure according to one of the preceding claims, characterised in that the articulation comprises a sphere (7).

7. Structure according to one of the preceding claims, characterised in that it additionally contains rods (22) with a diameter that corresponds to the diameter of the shafts (6) of the male parts (6, 7).

8. Structure according to one of Claims 1 and 3 to 7, characterised in that the head (12) of the female connecting parts is formed by two hollow spherical parts (32a, 32b) that are assembled by welding (at 33).

9. Structure according to one of the preceding claims, characterised in that the opening (20, 35) of the head (12) of the female connecting part (9a, 9b; 32a, 32b) which is located opposite the projection (10, 30) is coaxial with the bore (11; 31) of the projection (10, 30).

10. Structure according to one of Claims 1 to 8, characterised in that the opening (20, 35) of the head (12) of the female connecting part (9a, 9b; 32a; 32b) which is located opposite the projection (10, 30) is offset at an angle to the axis of the bore (11, 31) of the projection.

## Revendications

1. Structure d'appui pour prothèse dentaire, comprenant une série d'éléments standards préfabriqués (1, 6, 7 ; 9a, 9b ; 17 ; 32a, 32b) pourvus de piliers (1) qui sont destinés à une fixation classique sur les implants ; des organes de liaison femelles (9a, 9b ; 32a, 32b) présentant chacun une tête (12) et un prolongement (10, 30), leur tête (12) présentant une cavité sphérique (13) en étant traversée par des passages (16, 20) qui débouchent sur trois de ses surfaces latérales, et leur prolongement (10, 30) présentant un perçage cylindrique axial (11, 31) qui débouche sur la surface d'extrémité ; des organes de liaison mâles (6, 7) formés à partir d'une tige cylindrique (6) qui se termine à l'une de ses extrémités par une rotule (7) traversée par un passage (8) dont l'axe est perpendiculaire à la tige (6) ; des passages (16, 20) des têtes (12) des organes de liaison femelles (9a, 9b), ces passages (16, 20) s'élargissant progressivement vers l'extérieur de ces têtes (12) et présentant une dimension la plus faible qui correspond au diamètre de la vis (17) ; un passage (8) qui traverse la rotule (7) des organes mâles (6, 7) et qui présente dans sa région centrale une diminution du diamètre correspondant au diamètre de la tige de la vis (17) ; et des vis (17) qui permettent de relier à un pilier (1) un organe de liaison femelle (9a, 9b ; 32a, 32b) et/ou mâle (6, 7).

2. Structure selon la revendication 1, caractérisée par le fait que les organes de liaison femelles sont constitués par deux demi-coquilles (9a, 9b) pourvues chacune d'une tête (12) et d'un prolongement (10), cependant que les têtes (12) présentent des évidements sphériques (13) et sont traversées par des passages (16, 20) qui débouchent sur deux des surfaces latérales des têtes (12), et que les prolongements (10) présentent des cavités axiales cylindriques (11) qui débouchent sur la surface d'extrémité (en 12).

3. Structure selon la revendication 1 ou selon la revendication 2, caractérisée par le fait que le diamètre du perçage cylindrique (31) ou des cavités cylindriques (11) du prolongement (30 ; 10) de l'organe de liaison femelle (32a, 32b ; 9a, 9b) correspond au diamètre des tiges (6) des organes mâles (6, 7).

4. Structure selon l'une des revendications précitées, caractérisée par le fait que la surface supérieure des piliers (1) présente une surface d'appui sous la forme d'une partie de sphère (3) dont le rayon de courbure correspond à celui de la partie de surface sphérique externe des têtes (12) de l'organe de liaison femelle (9a, 9b ; 32a, 32b).

5. Structure selon l'une des revendications précédentes, caractérisée par le fait que le côté inférieur des têtes de vis (en 17) forme une surface sphérique (19) dont le rayon de courbure correspond à celui du renfoncement (3) du pilier et de la partie de la surface sphérique externe des têtes (12) des organes de liaison femelles (9a, 9b ; 32a, 32b).

6. Structure selon l'une des revendications précédentes, caractérisée par le fait que la rotule comporte une sphère (7).

7. Structure selon l'une des revendications précédentes, caractérisée par le fait qu'elle comprend en outre des tiges (22) dont le diamètre correspond au diamètre des tiges (6) des organes mâles (6, 7).

8. Structure selon l'une des revendications 1 et 3 à 7, caractérisée par le fait que la tête (12) des organes de liaison femelles est formée par deux parties de sphère creuses (32a, 32b) qui sont assemblées par soudage (en 33).

9. Structure selon l'une des revendications précédentes, caractérisée par le fait que l'ouverture (20, 35) de la tête (12) de l'organe de liaison femelle (9a, 9b ; 32a, 32b) qui est opposée au prolongement (10, 30) est coaxiale par rapport au perçage (11 ; 31) du prolongement (10, 30).

10. Structure selon l'une des revendications 1 à 8, caractérisée par le fait que l'ouverture (20, 35) de la tête (12) de la partie de liaison femelle (9a, 9b ; 32a, 32b) qui est opposée au prolongement (10, 30) s'étend en étant décalée angulairement par rapport à l'axe du perçage (11, 31) du prolongement.
